**Europäisches Patentamt**

**European Patent Office**

**Office européen des brevets**

(19)

(11) Veröffentlichungsnummer: **0 206 009**
**B1**

(12) # EUROPÄISCHE PATENTSCHRIFT

(45) Veröffentlichungstag der Patentschrift:
**31.01.90**

(51) Int. Cl.⁴: **H 02 K 16/00**

(21) Anmeldenummer: **86107484.7**

(22) Anmeldetag: **02.06.86**

(54) Antriebsvorrichtung, insbesondere für Textilmaschinen.

(30) Priorität: **11.06.85 DE 3520889**

(43) Veröffentlichungstag der Anmeldung:
**30.12.86 Patentblatt 86/52**

(45) Bekanntmachung des Hinweises auf die Patenterteilung:
**31.01.90 Patentblatt 90/5**

(84) Benannte Vertragsstaaten:
**CH GB IT LI**

(56) Entgegenhaltungen:
**DE-A- 3 026 679**
**DE-A- 3 234 673**
**GB-A- 2 035 713**
**US-A- 4 252 506**

**PATENT ABSTRACTS OF JAPAN, Band 9, Nr. 81**
**(E-307)[1804], 10. April 1985; & JP - A - 59 213 271**
**(HITACHI SEISAKUSHO) 03.12.1984**

(73) Patentinhaber: **SKF Textilmaschinen-Komponenten GmbH, Löwentorstrasse 68, D-7000 Stuttgart 50 (DE)**

(72) Erfinder: **Braun, Ernst, Dr.-Ing., Martin-Luther-Strasse 1, D-7950 Biberach/Riss (DE)**

(74) Vertreter: **Patentanwälte Phys. Bartels Dipl.-Ing. Fink Dr.-Ing. Held, Lange Strasse 51, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Antriebsvorrichtung, insbesondere für Textilmaschinen, mit wenigstens zwei parallelachsig nebeneinander angeordneten Drehstrommotoren, deren mittels je einer Wicklung versehene Statoren aus Blechen gebildet sind, wobei die Bleche jedes Stators mit den entsprechenden Blechen aller übrigen Statoren einstückig ausgebildet sind.

Sofern zwei oder mehr achsparallel nebeneinander angeordnete Wellen angetrieben werden müssen, die einen relativ geringen Achsabstand voneinander haben, kann ein Einzelantrieb dieser Wellen mittels je eines Elektromotors aus Platzgründen schwierig oder ausgeschlossen sein. Es wurde deshalb vorgeschlagen (DE-PS 367 938), für einen Einzelantrieb der Spindel von Spinnmaschinen, bei denen der Achsabstand der Spindeln sehr gering ist, die Statorblechpakete der für den Spindelantrieb vorgesehenen Drehstrommotoren in einem gemeinsamen Gehäuse anzuordnen, um zwischen je zwei unmittelbar benachbarten Statorblechpaketen den Raumbedarf für die Gehäuse einzusparen. Darüberhinaus wird hier vorgeschlagen, die Bleche jedes Stators mit den entsprechenden Blechen des unmittelbar benachbarten Stators einstückig auszubilden, wodurch allerdings keine weitere Platzersparnis erreicht wird.

Eine einstückige Ausbildung der einzelnen Statorbleche von zwei nebeneinander in einem gemeinsamen Gehäuse angeordneten Drehstrom-Asynchronmotoren ist auch bei einem Kompressor mit variabler Leistung bekannt (US-A-4 252 506), wobei die Statornuten so angeordnet sind, daß in der Ebene, welche durch die beiden Motorwellen definiert wird, je eine Nut beider Statoren liegt.

Ferner ist es bekannt (DE-A-3 234 673), für Drehstrommotoren höherer Leistung die Nennleistung des Motors auf mehr als zwei Einzelmotoren aufzuteilen und beispielsweise vier Motoren so anzuordnen, daß die Wellen ein Quadrat definieren. Die Statoren bilden dabei einen zusammenhängenden Block.

Es gibt jedoch auch Achsabstände zwischen mehreren parallel nebeneinander angeordneten Achsen, beispielsweise bei Arbeits-Komponenten für Texturiermaschinen, die so gering sind, daß auch bei einem Verzicht auf separate Gehäuse der Raumbedarf für die zu einem Einzelantrieb erforderlichen Motoren nicht ausreicht. Diese Wellen tragen deshalb je eine Riemenscheibe, über die ein alle zusammengehörigen Wellen antreibender Zahnriemen läuft. Eine der Wellen trägt ferner drehfest eine Antriebsrolle, gegen die ein umlaufender Flachriemen gedrückt wird. Nachteilig sind bei solchen Riemenantrieben nicht nur die relativ hohen Energieverluste, sondern auch die kurze Lebensdauer der Zahnriemen, die einen hohen Wartungsaufwand und einen relativ häufigen Stillstand der Komponente zur Folge hat, was die Effektivität der Texturiermaschine deutlich vermindert.

Der Erfindung liegt die Aufgabe zugrunde, eine Antriebsvorrichtung zu schaffen, mittels deren auch bei einem geringen Achsabstand der anzutreibenden Wellen, wie er beispielsweise bei Texturiermaschinen vorhanden ist, ein Einzelantrieb mittels je eines Drehstrommotors möglich ist. Diese Aufgabe löst eine Antriebsvorrichtung mit den Merkmalen des Anspruches 1.

Dadurch, daß bei der erfindungsgemäßen Lösung vermieden ist, daß gleichzeitig gleichnamige Maxima des magnetischen Statorjoch-Flusses unmittelbar benachbarter Statoren an der Stelle geringsten Abstandes auftreten, brauchen die Joche beider Statoren nicht die volle Höhe zu haben. Vielmehr kann man die Phasenverschiebung der Statorjoch-Flüsse, also die zeitliche Verschiebung des Durchlaufens der Stelle geringsten Abstandes zwischen den Statoren so wählen, daß der Abstand vom Nutgrund des einen Stators zum Nutgrund des unmittelbar benachbarten Stators nur gleich der Jochhöhe eines einzigen Stators ist, weil dieser Bereich des Blechpaketes dank der einstückigen Bleche ohne zusätzlichen Luftspalt bei den Statoren als Joch zur Verfügung steht. Insbesondere bei einer zweipoligen Ausführung der Motoren, wie sie bei sehr kleinen Durchmessern praktisch unumgänglich ist, fällt eine Halbierung der Jochhöhe für den noch realisierbaren Achsabstand erheblich ins Gewicht.

Es ist zwar bei in einer Reihe oder in einem Quadrat angeordneten Gleichstrommotoren bekannt (GB-A-2 035 713, Patents Abstracts of Japan, Band 9, Nr. 81 [(E-307) (1804), DE-A 3 026 679] zwischen zwei benachbarten Motoren einen gemeinsamen Jochabschnitt vorzusehen und dessen Höhe zu reduzieren. Ermöglicht wird diese Jochhöhenreduzierung hier jedoch dadurch, daß der magnetische Fluß im Bereich des gemeinsamen Jochabschnitts ganz oder teilweise durch entgegengesetzte Flußrichtungen kompensiert wird. Eine Flußkompensation ist aber bei Drehfeldmaschinen nur bedingt anwendbar. Beispielsweise bedingen entgegengesetzte Flußrichtungen gleiche Drehrichtungen.

Müssen drei Motoren so angeordnet werden, daß ihre Längsachsen die Kanten eines Prismas bilden, das einen Querschnitt in Form eines gleichseitigen Dreiecks hat, wie dies beispielsweise bei den üblichen Texturiermodulen von Texturiermaschinen der Fall ist, dann ist bei einer zweipoligen Ausführung aller drei Motoren eine räumliche Phasenverschiebung der gleichnamigen Maxima des magnetischen Statorjoch-Flusses von 120° optimal.

Sind hingegen die Motoren in einer geradlinigen Reihe nebeneinander angeordnet, dann ist gemäß Anspruch 3 eine Phasenverschiebung der Maxima des magnetischen Statorjoch-Flusses unmittelbar benachbarter Motoren um eine Polteilung am günstigsten.

Eine noch weitergehende Verringerung des Achsabstandes unmittelbar benachbarter Motoren läßt sich ohne eine Erhöhung der Feldstärke im Statorjoch dadurch erreichen, daß man gemäß Anspruch 4 an der Stelle des geringsten Abstandes zwischen zwei unmittelbar benachbarten Motoren bei beiden Statoren je einen Zahn vorsieht. Der Jochfluß kann sich dann an der Stelle des geringsten Abstandes zwischen den beiden unmittelbar benachbarten Statoren in die beiden Zähne hinein entlasten. Dieser Entlastungseffekt kann zu einer noch weitergehenden Verringerung der Jochhöhe genutzt werden.

Im folgenden ist die Erfindung anhand von zwei in der Zeichnung dargestellten Ausführungsbeispielen im einzelnen erläutert. Es zeigen:

Fig. 1 einenteils in Ansicht und einenteils im Längsschnitt dargestellten Texturiermodul mit dem Ausführungsbeispiel der erfindungsgemäßen Antriebsvorrichtung,

Fig. 2 einen Schnitt nach der Linie II - II der Fig. 1,

Fig. 3 einen Schnitt entsprechend Fig. 2 des zweiten Ausführungsbeispiels.

Der als Ganzes mit 1 bezeichnete Bearbeitungsteil eines Texturiermoduls, durch den hindurch der zu texturierende Faden geführt wird, ist in bekannter Weise ausgebildet. In einer Halterung 2 sind drei gleich ausgebildete Wellen 3 parallel und im Abstand voneinander gelagert. Die Anordnung der Wellen 3 ist so gewählt, daß ihre Längsachsen die Kanten eines Prismas mit gleichschenkligem Querschnitt definieren. In Längsrichtung im Abstand voneinander tragen die Wellen drehfest auf ihnen angeordnete Scheiben 4, deren Durchmesser so gewählt ist, daß sie sich alle überlappen. Daher sind die Scheiben 4 in Längsrichtung der Wellen 3 so gegeneinander versetzt angeordnet, daß sie zwischen die Scheiben 4 der beiden anderen Wellen 3 eingreifen können.

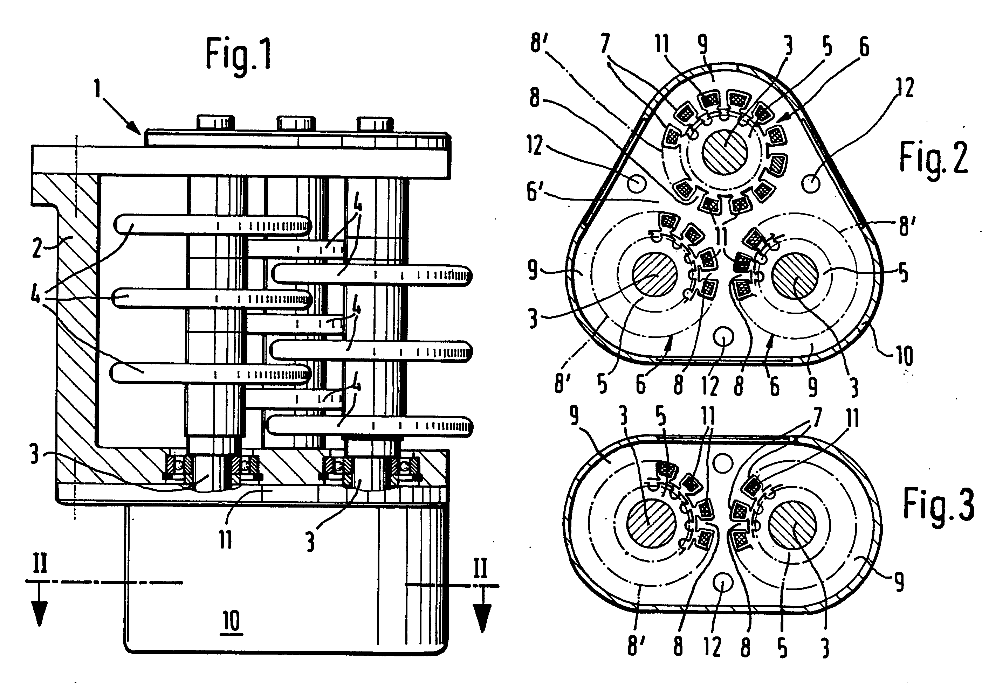

Mit jeder der drei Wellen 3 ist der Rotor 5 eines Drehstrom-Asynchronmotors gekuppelt, und zwar im Ausführungsbeispiel in der Weise, daß er mit Presssitz auf das eine Wellenende aufgeschoben worden ist. Die zu den gleich ausgebildeten, je als Kurzschlußläufer ausgeführten Rotoren 5 gehörenden Statoren 6 werden durch ein einziges Blechpaket gebildet. Jedes Blech 6' weist deshalb, wie Fig. 2 zeigt, drei die Bohrungen für die Aufnahme der Rotoren 5 bildende kreisförmige Ausstanzungen auf, deren Zentrum auf die Längsachsen der Wellen 3 ausgerichtet sind, also ebenfalls die Ecken eines gleichschenkligen Dreieckes definieren. Konzentrisch zu diesen Ausstanzungen sind die Statornuten 7 angeordnet. Die Statornutzahl beträgt im Ausführungsbeispiel 12. Wie Fig. 2 zeigt, ist die räumliche Anordnung der Statornuten 7 so gewählt, daß sich an der Stelle des geringsten Abstandes zwischen zwei unmittelbar benachbarten Statoren, also ausgerichtet auf die Verbindungslinien zwischen den Längsachsen der drei Statoren 6, je ein Statorzahn 8 jedes Stators befindet. Dabei ist der Abstand zwischen dem Fußkreis 8' der Statorzähne 8 unmittelbar benachbarter Statoren an der Stelle des geringsten Abstandes etwas kleiner als die einfache Höhe des Statorjoches 9 in den kreisringförmigen Abschnitten gewählt, in denen die Statorjoche 9 an der Innenwand des Gehäuses 10 der Antriebsvorrichtungen anliegen. Wie Fig. 2 zeigt, hat das an die Halterung 2 angeflanschte Gehäuse 10 die Querschnittsform eines gleichseitigen Dreieckes mit stark abgerundeten Ecken, wobei deren Innenradius gleich dem Außenradius der Statorjoche 9 ist.

Trotz dieses geringen Abstandes der Fußkreise 8' der Statorzähne 8 voneinander, der es ermöglicht, die drei Motoren mit dem durch die Wellen vorgegebenen Achsabstand ausführen zu können, überschreitet die Jochfeldstärke auch an der Stelle des geringsten Abstandes der Fußkreise 8' voneinander nicht den in den ringkreisförmigen Abschnitten auftretenden Maximalwert. Dies ist in erster Linie darauf zurückzuführen, daß die Zuordnung der drei Stränge der in den Statornuten 7 liegenden Statorwicklung 11 zu den Statornuten 7 sowie der Anschluß der Stränge an die einzelnen Phasen des speisenden Netzes so gewählt sind, daß die gleichnamigen Maxima der Statorjochflüsse räumlich um je 120° gegeneinander verschoben sind. Geht man beispielsweise von der räumlichen Lage des einen Jochflußmaximums bei dem in Fig. 2 oben dargestellten Stator aus, dann ist das gleichnamige Jochflußmaximum des in Fig. 2 links unten dargestellten Stators um 120° entgegen dem Uhrzeigersinn und das entsprechende gleichnamige Jochflußmaximum des in Fig. 2 rechts unten dargestellten Stators im Uhrzeigersinn um 120° räumlich versetzt. Es genügt daher, die Stränge der Wicklungen der einzelnen Statoren bei gleicher räumlicher Anordnung nicht an die gleichen Netzphasen anzuschließen, sondern die Phasenanschlüsse so zu vertauschen, daß die an dieselbe Phase angeschlossenen Stränge räumlich um 120° gegeneinander versetzt liegen. Durch diese Phasenverschiebung der Maxima der Jochflüsse wird erreicht, daß die Flußüberlagerungen in den Bereichen des geringsten Abstandes der Fußkreise 8' voneinander nie zu Werten führen, die größer sind als das Flußmaximum.

Der etwas geringere Abstand zwischen den Fußkreisen 8' an der engsten Stelle gegenüber der Jochhöhe im kreisringförmigen Jochabschnitt ist dadurch möglich, daß sich der magnetische Fluß an der engsten Stelle zwischen den Fußkreisen 8' in die hier aufeinander ausgerichteten Statorzähne 8 hinein entlasten kann.

Die für Nieten zum Zusammenhalten der Bleche 6' vorgesehenen Ausstanzungen 12 liegen, wie Fig. 2 zeigt, in den Bereichen zwischen den ringkreisförmigen Jochabschnitten benachbarter Statoren. Sie wirken sich deshalb nicht auf die magnetischen Verhältnisse in den Statoren 6 aus.

Mit dem Ersatz des bisher ausschließlich üblichen Antriebes der Wellen mittels Zahnriemen durch den Direktantrieb mittels je eines zweipoligen Asynchron-Motors wird nicht nur ein wartungsfreier Antrieb erreicht. Auch die Energieeinsparung ist beträchtlich, was im Hinblick auf die Vielzahl von Modulen, die an einer Texturiermaschine vorhanden sind, ebenfalls von Bedeutung ist.

Das Ausführungsbeispiel gemäß Fig. 3 unterscheidet sich von demjenigen gemäß den Fig. 1 und 2 nur dadurch, daß lediglich zwei Drehstrom-Asynchronmotoren nebeneinander angeordnet sind. Daher sind die sich entsprechenden Teile mit gleicher Bezugszahlen versehen. Da diese beiden Asynchronmotoren zweipolig ausgebildet sind, muß das Maximum des magnetischen Statorjoch-Flusses des anderen Motors um eine Polteilung, also 180°, versetzt sein.

**Patentansprüche**

1. Antriebsvorrichtung, insbesondere für Textilmaschinen, mit wenigstens zwei parallelachsig nebeneinander angeordneten Drehstrommotoren, deren mit je einer Wicklung versehene Statoren aus Blechen gebildet sind, wobei die Bleche jedes Stators mit den entsprechenden Blechen aller übrigen Statoren einstückig ausgebildet sind, dadurch gekennzeichnet, daß die Zuordnung der Statorwicklung (11) zu den Statornuten (7) und zu den Phasen des speisenden Netzes bei allen Motoren so gewählt ist, daß die in Motordrehrichtung wandernden, gleichnamigen Maxima der magnetischen Flüsse in den Jochen (9) der Statoren (6) zu unterschiedlichen Zeitpunkten die zwischen den unmittelbar benachbarten Statoren (6) vorhandene Stelle geringsten Abstandes durchlaufen.

2. Antriebsvorrichtung nach Anspruch 1, dadurch gekennzeichnet, daß drei Motoren so angeordnet sind, daß ihre Längsachsen die Kanten eines Prismas definieren, das einen Querschnitt in Form eines gleichschenkligen Dreiecks hat, und daß bei einer zweipoligen Ausführung aller drei Motoren die räumliche Phasenverschiebung der gleichnamigen Maxima der magnetischen Statorjoch-Flüsse 120° beträgt.

3. Antriebsvorrichtung nach Anspruch 1, dadurch gekennzeichnet, daß die Motoren in einer geradlinigen Reihe angeordnet sind und das Maximum des magnetischen Statorjoch-Flusses um eine Polteilung gegenüber dem gleichnamigen Maximum des magnetischen Statorjoch-Flusses des unmittelbar benachbarten Motors versetzt ist.

4. Antriebsvorrichtung nach einem der Ansprüche 1 bis 3, dadurch gekennzeichnet, daß an der Stelle des geringsten Abstandes zwischen zwei unmittelbar benachbarten Motoren beide Statoren (6) je einen Zahn (8) aufweisen.

## Claims

1. A drive apparatus, in particular for textile machines, having at least two polyphase induction motors, which are disposed adjacent one another, have parallel axes, and the stators of which, each provided with a winding, are formed of metal sheets, the sheets of each stator being formed in an integral manner with the corresponding sheets of all the remaining stators, characterized in that the allocation of the stator winding (11) with respect to the stator grooves and with respect to the phases of the current supply is selected in the case of all motors in such a way that the homologous peaks of the magnetic flux, moving in the direction of rotation of the motor, in the yokes (9) of the stators (6), pass through the points at which there is the least distance between the immediately adjacent stators (6) at different points in time.

2. A drive apparatus as claimed in claim 1, characterized in that three motors are arranged in such a manner that their longitudinal axes define the edges of a prism, the cross-section of which has the shape of an isosceles triangle; and in that in the case of a two-pole construction of all three motors, the spatial phase shift of the homologous peaks of the magnetic stator yoke flux is 120°.

3. A drive apparatus in accordance with claim 1, characterized in that the motors are disposed in a rectilinear row and the peak of the magnetic stator yoke flux is offset by one pole pitch with respect to the corresponding peak of the magnetic stator yoke flux of the motor which is immediately adjacent.

4. A drive apparatus as claimed in one of claims 1 to 3, characterized in that both stators (6) each comprise one tooth (8) at the point at which there is the least distance between two immediately adjacent motors.

## Revendications

1. Dispositif d'entraînement, notamment pour des machines textiles, comportant au moins deux moteurs triphasés disposés l'un à côté de l'autre avec des axes parallèles et dont les stators pourvus chacun d'un enroulement sont constitués de tôles, les tôles de chaque stator étant agencées d'une seule pièce avec les tôles correspondantes de tous les autres stators, caractérisé en ce que la disposition de l'enroulement de stator (11) par rapport aux encoches de stator (7) et par rapport aux phases du réseau d'alimentation est choisie, pour tous les moteurs, de telle sorte que les maxima de même nom des flux magnétiques progressant dans le sens de rotation des moteurs dans les culasses (9) des stators (6) franchissent à des instants différents l'endroit d'espacement minimal existant entre les stators (6) directement adjacents.

2. Dispositif d'entraînement selon la revendication 1, caractérisé en ce que trois moteurs sont disposés de telle sorte que leurs axes longitudinaux définissent les arêtes d'un prisme, qui a une section droite en forme de triangle équilatéral et en ce que, dans le cas d'une réalisation bipolaire des trois moteurs, le déphasage spatial des maxima de même nom des flux magnétiques des culasses de stators s'élève à 120°.

3. Dispositif d'entraînement selon la revendication 1, caractérisé en ce que les moteurs sont disposés dans une rangée rectiligne et le maximum du flux magnétique de culasse de stator est décalé d'un pas polaire par rapport au maximum de même nom du flux magnétique de culasse de stator du moteur immédiatement adjacent.

4. Dispositif d'entraînement selon une des revendications 1 à 3, caractérisé en ce que, à l'endroit d'espacement minimal entre deux moteurs directement adjacents, les deux stators (6) comportent chacun une dent (8).

Fig.1

Fig.2

Fig.3

EP 0 206 009 B1